# EUROPEAN PATENT SPECIFICATION

(11) **EP 1 982 866 B1**
(45) Date of publication and mention of the grant of the patent: **15.06.2011**
(21) Application number: 08154591.5
(22) Date of filing: 16.04.2008
(51) Int. Cl.: B60Q 1/56, F21V 5/00, F21V 11/16, F21V 5/04

(54) **Lighting arrangement for illuminating the number plate of a motor-vehicle**
Beleuchtungsanordnung für die Beleuchtung des Nummernschildes eines Motorfahrzeugs
Agencement lumineux pour éclairer la plaque minéralogique d'un véhicule à moteur

(30) Priority: 17.04.2007 IT PN20070022
(43) Date of publication of application: 22.10.2008
(73) Proprietor: Plastal S.p.A., 33170 Pordenone (IT)
(72) Inventor: Favotto, Fabio, 31046 Oderzo (Treviso) (IT); Collavo, Andrea, 32020 Lentiai (Belluno) (IT)
(74) Representative: Gonella, Mario

(56) References cited:
- EP-A- 1 264 732
- US-A1- 2005 286 258
- US-A1- 2007 024 420
- US-A1- 2007 025 113

## Description

The present invention refers to a lighting arrangement adapted to illuminate the number plate, in particular the rear one, of a motor-vehicle.

As is generally known, a major problem connected with the illumination of the number plate of a motor-vehicle lies in the fact that the lighting arrangement is mounted in a position lying above the number plate itself and sends out its light rays in a tangential direction relative thereto. As a result, the number plate turns out as being illuminated in a quite uneven manner, i.e. to a generally adequate extent in its upper portion, which lies contiguous to the lighting source, and in a rather poor manner in the lower portion, which lies farther away from the lighting source.

In the earlier days, the lighting source used to be formed of one or several incandescent lamps that shed their light in all directions, which practically meant a lot of energy being scattered away to no useful purpose, i.e. plainly wasted. On the other hand, the lighting arrangement on its whole turned out as being quite bulky and scarcely reliable, further to excessively expensive. For this reason, use has more recently started to be made of light-emitting diodes (LEDs) in this particular application.

The European patent application EP-A-1264732, filed by this same Applicant, describes a lighting apparatus for the illumination of the number plate of motor-vehicles, which comprises a plurality of such LEDs, as well as a focusing lens 5 to collimate the light beam emitted by the LEDs themselves. This focusing lens is so shaped as to feature a planar receiving surface facing the LEDs and a curvilinear and convex, i.e. semi-cylindrical emitting surface opposing the receiving surface. The actual purpose of this focusing lens is to substantially limit the divergence of the light emitted by the LEDs transversally to the plane of the number plate (i.e. in the direction parallel to the running direction of the vehicle), while favouring the natural divergence of the same light longitudinally relative to the plate of the number plate (i.e. in the direction orthogonal to the running direction of the vehicle). In this way, the illumination of the number plate is really improved, but no fully satisfactory result is reached, actually. A practical, and not theoretical, limitation to the applicability of such solution is set by the outer portion of the focusing lens, which - owing to the geometry, i.e. configuration thereof - implies that use must anyway be made of an additional transparent closing or sealing member. In addition, a plurality of such LEDs is generally requested, and this makes the whole lighting arrangement quite more complicated and expensive.

US 2007/0024420 A1 discloses a lighting arrangement for the illumination of the number plate of motor-vehicles, comprising a light source protected by a transparent shielding member and adapted to emit a light beam with an optical axis that is just slightly inclined relative to the plane of the number plate, wherein said shielding member is provided with a partial screening provision aimed at attenuating the luminance in the central area of the number plate lying closer to the light source. However, said device does not allow an adjustment of the emitting pattern of the led in a direction parallel to the plate.

It therefore is a main purpose of the present invention to provide a lighting arrangement for the illumination of the number plate of a motor-vehicle, which represents a sensible improvement - from both a technical and an economical point of view - over the above cited prior-art solutions.

A further purpose of the present invention is to provide a lighting arrangement of the above cited kind, which is particularly simple in its structure, so as to prove particularly low-cost and convenient to assemble, as well as reliable in operation.

According to the present invention, these and further aims are reached in a lighting arrangement for the illumination of the number plate of motor-vehicles incorporating the characteristics as recited in the appended claims.

Anyway, features and advantages of the present invention will be more readily understood from the description that is given below by way of non-limiting example with reference to the accompanying drawings, in which:
- Figure 1 is a schematic, vertical sectional view in a direction parallel to the running direction of the vehicle, of an example of lighting arrangement according to the prior art and comprised of a LED-type light source having the optical axis directed towards the number plate;
- Figure 2 is a schematic front view of the illuminating effect produced on a half portion of the plate by a single LED-type light source with an angular aperture of 120° according to the prior art;
- Figure 3 is a schematic, vertical sectional view in a direction parallel to the running direction of the vehicle, of a first exemplary embodiment of a lighting arrangement according to the present invention, with a screening member applied thereto;
- Figure 4 is an axonometric representation of a detail of the lighting arrangement shown in Figure 3;
- Figure 5 is a schematic front view of the illuminating effect produced on a portion of the plate by the lighting arrangement shown in Figures 3 and 4;
- Figure 6 is a diagrammatical view of the spatial distribution of the relative luminous intensity of a LED with an angular aperture of 120°;
- Figure 7 is a schematic, vertical sectional view in a direction parallel to the running direction of the vehicle, of a second exemplary embodiment of a lighting arrangement according to the present invention;
- Figure 8 is an axonometric representation of a detail of the lighting arrangement shown in Figure 7;
- Figure 9 is a schematic, vertical sectional view in a direction parallel to the running direction of the vehicle, of a modified embodiment of the lighting arrangement shown in Figures 7 and 8;
- Figure 10 is an axonometric representation of a detail of the lighting arrangement shown in Figure 9;
- Figure 11 is a schematic, vertical sectional view in a direction parallel to the running direction of the vehicle, of a third exemplary embodiment of a lighting arrangement according to the present invention;
- Figure 12 is an axonometric representation of a detail of the lighting arrangement shown in Figure 11;
- Figure 13 is a schematic, vertical sectional view in a direction parallel to the running direction of the vehicle, of a modified embodiment of the lighting arrangement shown in Figures 11 and 12;
- Figure 14 is an axonometric representation of a detail of the lighting arrangement shown in Figure 13;
- Figure 15 is a schematic view of the lighting arrangement as viewed from a point situated on the number plate, in the two embodiments A and B thereof illustrated in Figure 11 and in Figure 13, respectively;
- Figure 16 is a representation of two possible configurations A and B for embodying the invention covered by this patent;
- Figure 17 is a representation of two further possible configurations A and B for embodying the invention covered by this patent, based on the so-called co-moulding method.

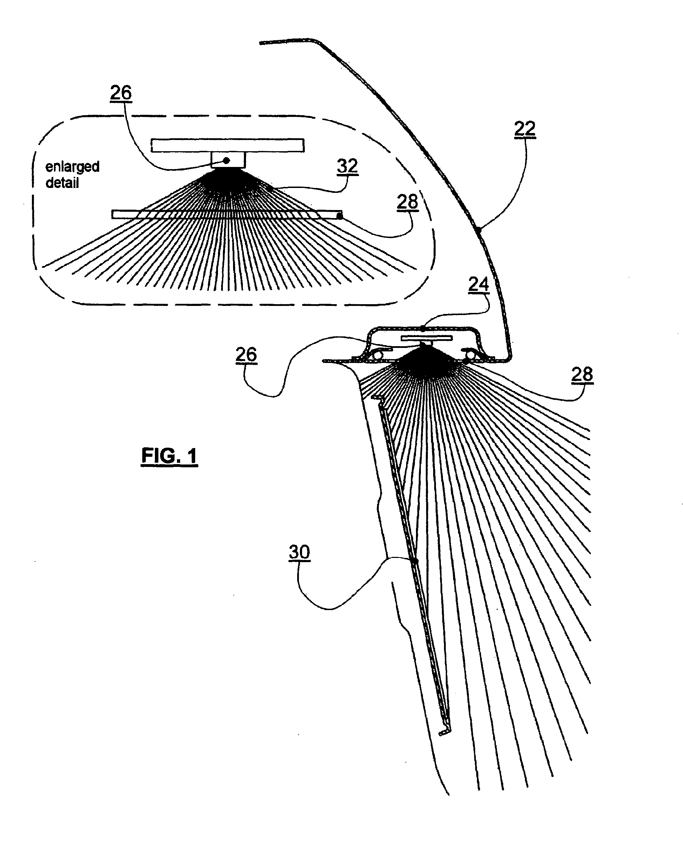

Shown schematically in Figure 1 there is a lighting arrangement for the illumination of the number plate of a motor-vehicle according to the prior art, which is comprised of a LED-based light source having the optical axis thereof directed towards the number plate.

Indicated in Figure 1 there are the contour 22 of the body of the motor-vehicle. In which there is included the accommodation 24 for the lighting arrangement 26, as duly closed by a transparent shielding member 28, and the number plate 30 attached to the rear surface of the body in a substantially vertical position. The lighting arrangement 26 is comprised by a white-light emitting, high-luminosity LED, i.e. emitting white light at a high intensity, arranged so as to have the optical axis thereof inclined at an angle of not less than 8° relative to the plane of the number plate 30, as this is provided for by the applying standard regulations.

As it can be better and more clearly noticed in the enlarged detail shown in Figure 1, the rays of the light beam 32 usually have a spatial distribution according to a conical pattern with an angular aperture of 120°, and diffuse by passing through the transparent shielding member 28. As a result, the emitted light tends to disperse to quite a remarkable extent towards the rear side of the motor-vehicle.

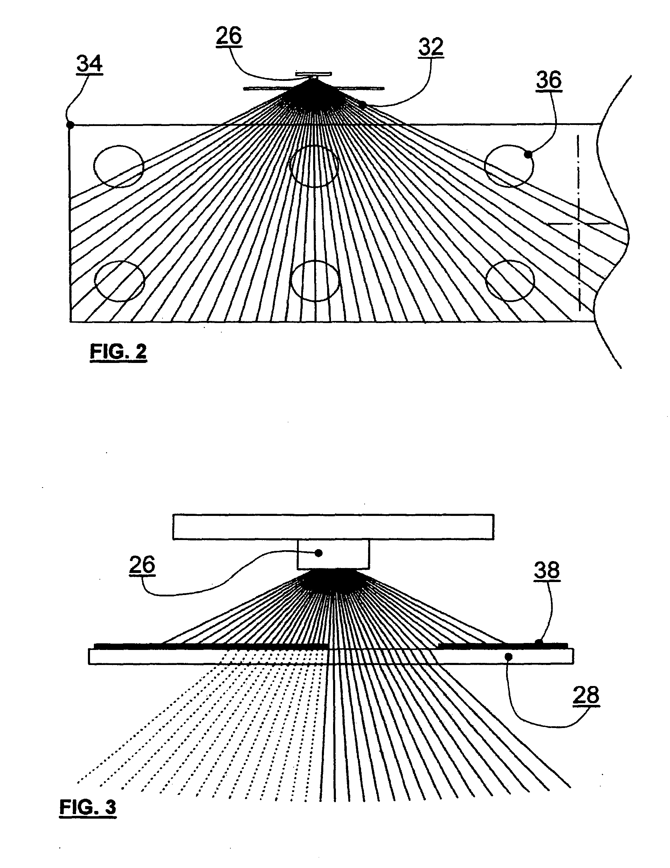

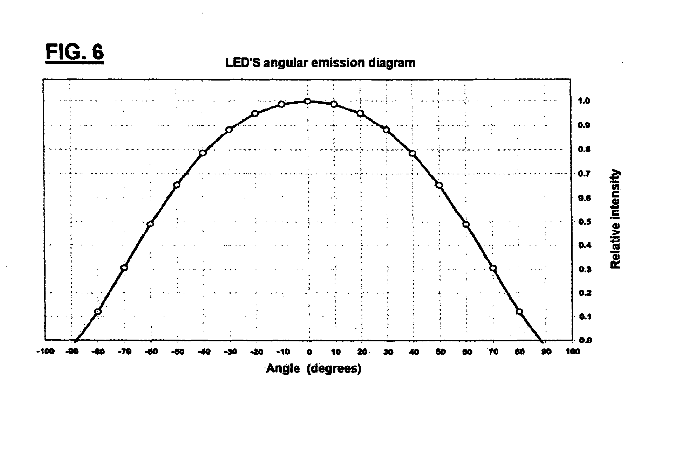

Figure 2 illustrates schematically, with reference to the lighting arrangement shown in Figure 1, the left-hand half-portion of the number plate as projected on a vertical plane 34 passing through the LED 26 and extending orthogonally to the running direction of the motor-vehicle. The circles 36 represent the luminance detection or measurement areas provided for by the European standard regulations (ECE). The rays of the light beam 32 are those emitted by the LED 26 and lie on said plane 34. Quite obviously, the measurement areas situated at the sides, i.e. more laterally, and on the lower portion of the half-plate are the most critical ones as far as the distribution of the light over the plate is concerned, since they are the farthest ones from the light source. In addition, when the light source is formed of a single LED, the middle light rays, i.e. the rays lying closer to the optical axis of the LED, have a higher intensity than those lying at the sides. This fact is best illustrated in the diagram of Figure 6, which represents a section of the spatial distribution of the relative luminous intensity of a LED versus the angular aperture. It can most clearly be noticed that a maximum in light intensity occur in connection with, i.e. at a zero angular aperture (optical axis), whereas light intensity then decreases as the inclination of the light rays increases. The angular aperture of a LED is defined as the sum of the two angles, which a light intensity amounting to 50% of the maximum value corresponds to, i.e. 60° in this particular case. The diffusion of the light emitted by the LED of course extends, i.e. continues - albeit with a gradually decreasing intensity - even beyond such angles of 60°, thereby contributing to the illumination of the areas located at the sides of the plate (critical areas). When viewed in cross-section, this characteristic clearly shows how the light rays dispersing rearwards, i.e. on the rear side of the motor-vehicle are provided with less energy than those on which there acts a lens that is applied so as to re-distribute light onto the lower portion of the number plate.

For these reasons, largely known in the art is the difficulty found in trying to illuminate the various areas of a number plate in a substantially even manner, as this on the other hand is provided for by all international standard regulations applying to motor-vehicles. In the particular case shown in Figure 2, the second measurement circle in the upper portion can be noticed to be able to reach luminance values as high as more than ten times those detected in the first measurement circle located on the left side at the bottom.

In an attempt to limit such differences, according to a first feature of the present invention, in the lighting arrangement shown in Figure 3 there has been added - on a portion of the inner surface of the shielding member 28 - a screening layer 38, the functional purpose of which is to attenuate luminance in the middle region of the number plate lying closer to the light source, where there would otherwise concentrate a large amount of diffusing light, which is hardly capable of being subdued to any proper extent by the lens alone. The portion of area provided with said screening layer 38 is characterized by a particularly selected geometry preventing it from intersecting the rays of light directed towards the measurement circles in the lower row, as this shall be explained in greater detail further on. Furthermore, this screening layer 38 may be applied with any known method or technique, e.g. by pad printing using ink or paint, by means of adhesive or transfer film, by laser processing to surface opacifying purposes, or by a plastic overmoulding technique, wherein the layer may in the latter case be provided also on the outer side of the lens (i.e. the side facing away from the LED).

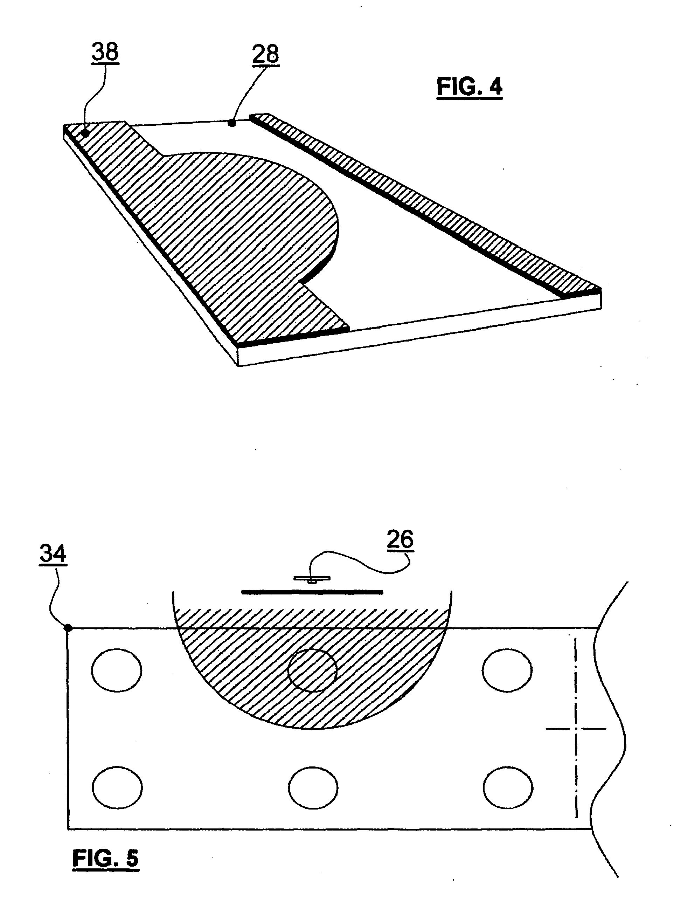

Figure 4 is an axonometric representation of the inner surface of the shielding member 28 as partially provided with the above-mentioned screening layer 38.

Similarly to Figure 2, Figure 5 illustrates schematically, the left-hand half-portion of the number plate as projected on a vertical plane 34 passing through the LED 26 and extending orthogonally to the running direction of the motor-vehicle, wherein the elliptically shaped boundary of the luminance attenuation zone has been specially outlined in this Figure. Such partial screening brings about an attenuation effect that is not as clean-cut and sharply defined as this has been outlined, actually, since the LED 26 is not a spotlight-like source of light, but tends rather to emit light under a certain scattering of the related beam. As a result, this characteristic of the LED gives rise to a certain gradation or shading-off effect of the illuminated contour, which further contributes to an even illumination of the number plate of the motor-vehicle.

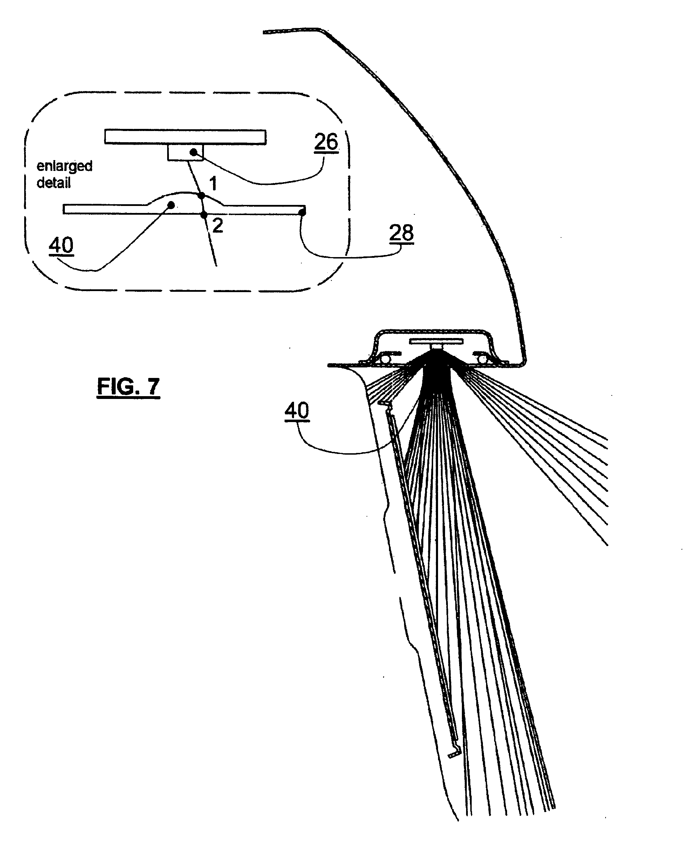

According to a second embodiment of the present invention, as illustrated in Figure 7, a still more even distribution of the light on the number plate of the motor-vehicle is achieved through the use of a particular lens 40, which is preferably integrated in the transparent member 28 used to shield the LED 26, and which is effective in concentrating onto the number plate a greater number of rays that would otherwise be dispersed. Since such shielding member is required to have an outer surface having preferably a planar shape free of corners, recesses and similar irregularities, and since such integration of the lens in the transparent shielding member shall occur following a definite mutual relation so that both components contribute to the unhindered optical path of the light rays, the innovatory solution of the invention brings into effect a specific optical geometry, a section of which is known as planoconvex lens. In a first embodiment thereof, the lens 40 has a cylindrical shape with a circular contour and, in a departure from the prior art, the convexity of the lens is in this case turned towards, i.e. facing the light source. Indicated in the enlarged detail shown in Figure 7 there is the optical path of a ray of light, along with the two light refraction points 1 and 2, which both faces of the planoconvex lens 40 contribute to.

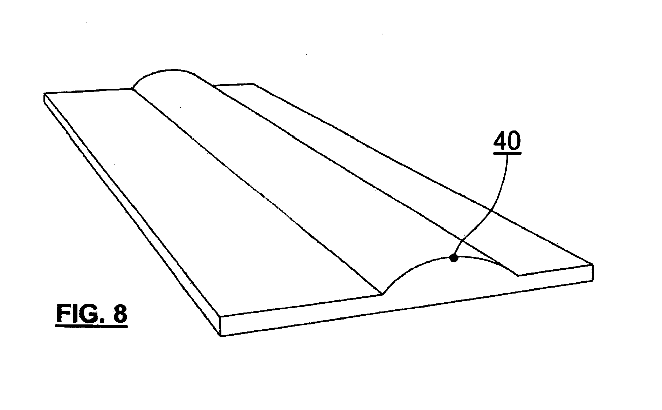

Specially highlighted in the axonometric representation of Figure 8 is the fact that the lens 40 has the above-mentioned planoconvex geometry in a section and, at the same time, the afore-cited cylindrical geometry in the section lying orthogonally thereto.

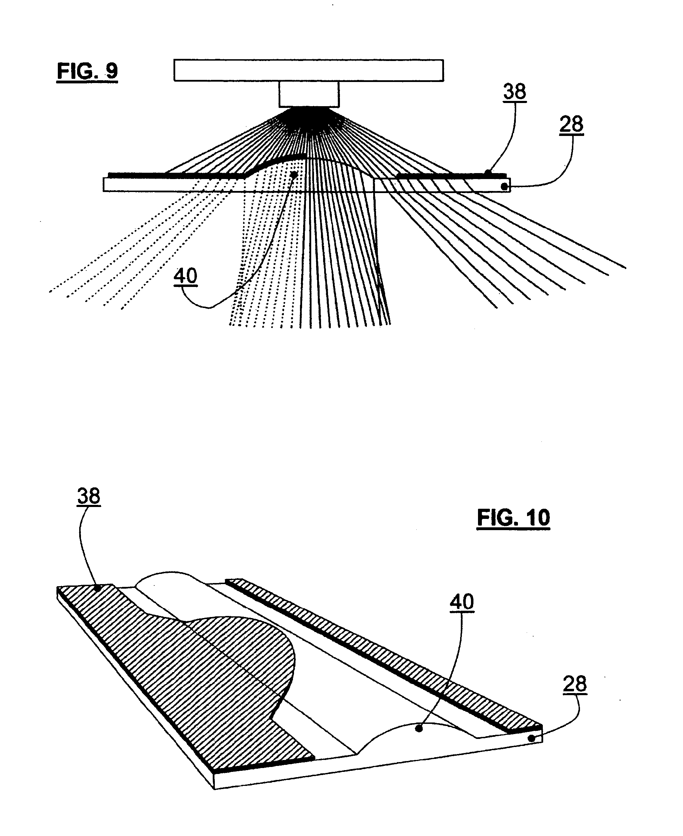

Figure 9 is a schematic cross-sectional view of another embodiment representing a further improvement over the one illustrated in Figures 7 and 8. The lens 40 and the shielding member 28, which are mutually integrated, are provided on the inner surface thereof with a partially screening member 38. In a manner that is substantially similar to what has been described previously with reference to Figure 3, the functional purpose of such partial screening provision is even in this case an attenuation of the luminance as indicated in Figure 5.

Figure 10 is an axonometric representation of the inner surface of the shielding member 28, as integrated with the lens 40 and with the above-mentioned partial screening provision 38 applied thereupon.

However, as this can on the other hand be noticed in the schematic representation in Figure 7, light distribution over the surface of the number plate does not prove as being fully optimized yet.

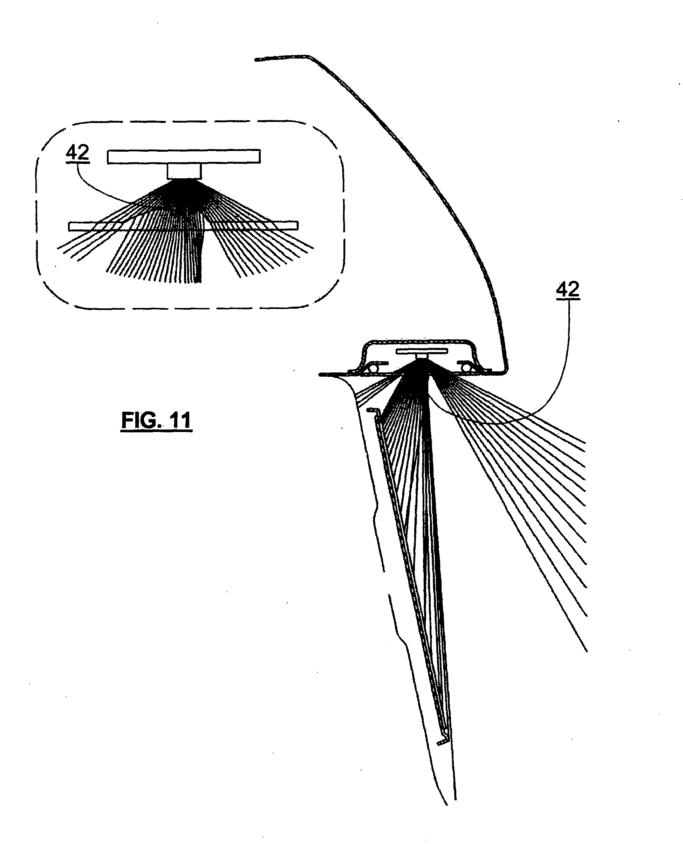

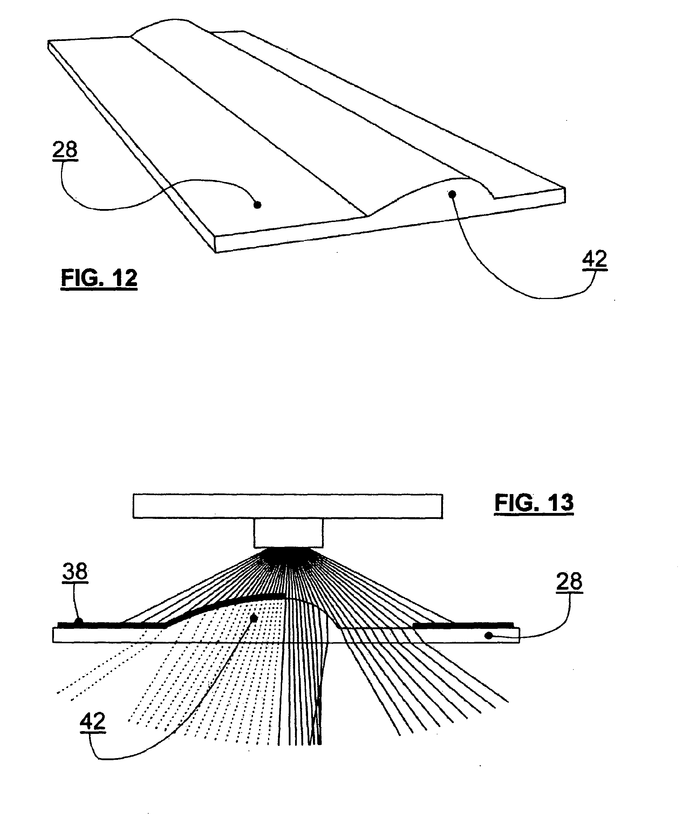

Figure 11 is a schematic, vertical sectional view in a direction parallel to the running direction of the vehicle, of a third embodiment of the lighting arrangement according to the present invention, which represents again an improvement over the afore considered ones, and according to which a lens 42 features a convex contour with a variable curvature radius. For a luminance distribution over the surface of the number plate to be obtained, which is as even as possible, as this is required by the applying standard regulations, the curvature radius is calculated under due consideration of a number of parameters. In this connection, particularly considered are such parameters as the configuration of the rear portion, i.e. the back of the motor-vehicle body, the distance of the light source to the number plate, and the inclination of the latter. As it can be noticed in the enlarged detail in Figure 11, both surfaces of the lens contribute to light refraction so as to obtain a correct and even distribution of the light rays all over the number plate. In this connection it should also be noticed how - in view of achieving the desired effect-the variation of the curvature radius of the convex contour of the lens 42 is such as to effect a greater concentration of the light rays in the areas or zones lying far from the light source (lower portion of the number plate), and such light rays are also the most intense ones, since lying closer to the optical axis of the LED. To this purpose, when viewed in cross-section, the curvilinear contour of the lens 42 can be noticed to feature a variable curvature radius that is preferably wider in a first portion and narrower in a second portion thereof, as shown in the axonometric representation of Figure 12 when moving in the left-to-right direction.

Figure 13 is a schematic cross-sectional view of an embodiment, which represents again a still further improvement over those illustrated in Figures 11 and 12. The lens 42 and the shielding member 28, in a mutually integrated construction, are provided on the inner surface thereof with a screening member 38 that does not extend to cover the entire surface.

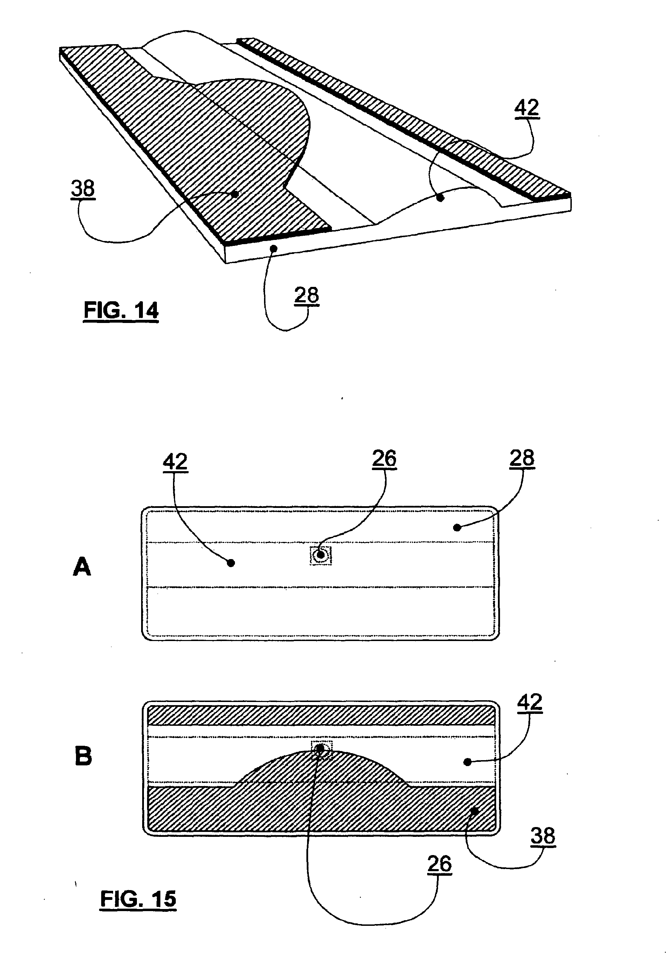

Figure 14 is an axonometric representation of the inner surface of the shielding member 28, as integrated with the lens 42 featuring a variable-radius contour, and provided the partial screen 38. Even in this case, the functional purpose of such partial screening provision is attenuating the luminance in the way as indicated in Figure 5.

Finally, Figure 15 is a schematic view of the lighting arrangement as viewed from a point situated on the number plate, in the two embodiments thereof illustrated in Figure 11 and in Figure 13, respectively. In the second case, the screening is effective not only in conferring a particular aesthetically appealing quality to the lighting arrangement itself, but also in showing off a peculiar advantage of the present invention, i.e. the advantage deriving from the fact that, as compared with the usual size requirements of prior-art solutions in general, a marked reduction is in this case obtained in the size of the surface required for the passage of the light needed to adequately illuminate the number plate of a motor-vehicle. This reduction in the surface may then add to another kind of reduction, i.e. the reduction n in volume obtained through the use of a LED, to constitute a potentially innovatory feature as compared with the volume and space requirements usually connected to prior-art solutions.

Described below will now be some further possible real-life configurations, i.e. configurations thought for actual applications, of the lighting arrangement according to the present invention.

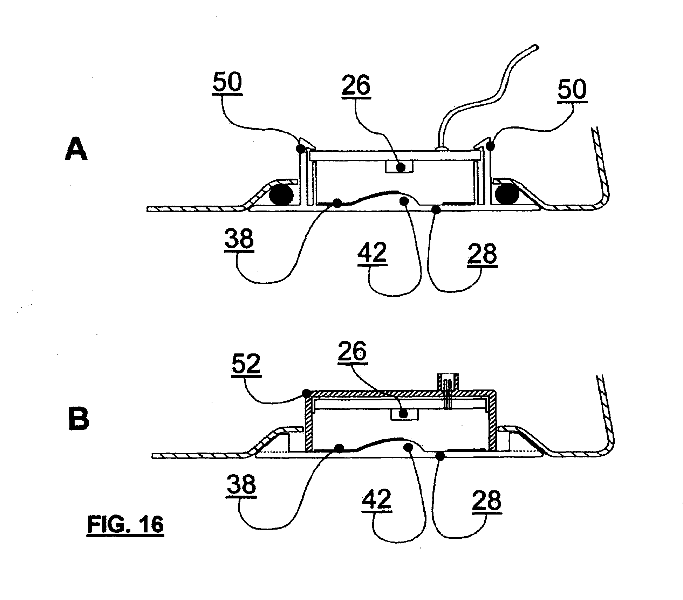

Illustrated in Figure 16(A) is a single transparent member (incl. optical system 28, 42 and screening provision 38) supporting - through proper snap-fitting attachments 50 - the printed-circuit board carrying the LED 26 along with the related electronic components and wiring; the assembly (i.e. transparent member + circuit) can be mounted to a water-tight, i.e. appropriately sealed component part of the body of the motor-vehicle, such as the bonnet, the hatchback or related opening systems, under utilization of an appropriate gasket at the mounting interface to protect against water penetration.

Shown in Figure 16(B) is on the contrary the case represented by a small-sized module comprised of the transparent member (with related optical system 28, 42 and screening provision 38) joined to a box 52 acting as a container for the circuit and the connections with the vehicle-side electric system. The two plastic parts may be joined together by welding, bonding or other techniques capable of ensuring a proper sealing effect, i.e. water-tightness. Connection with the vehicle's electric system can on the other hand be provided through an appropriate conformation of the box for the required connector to be integrally formed there, with the related contacts already attached to the circuit. With such conformation thereof, the assembly can then be mounted to the bumper or other similar open, i.e. exposed and unsealed component part of the vehicle's body, since the small-sized module is water-tight by itself.

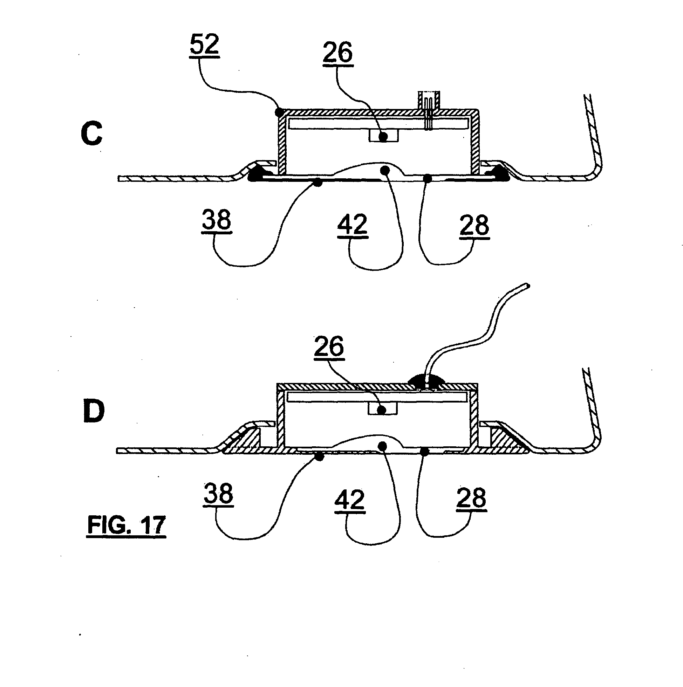

Figure 17(C) illustrates a small-sized module similar to the above-described one, wherein the sole difference lies in the transparent member 28 provided as a bimaterial multilayered laminate, wherein the opaque and compressible layer 38 doubles as screening provision and sealing gasket at the same time. This kind of embodiment offers clear advantages of both a cost-related and a quality-related nature connected with the manufacturing process used for the part, and is further adapted to be applied to both sealed and non-sealed parts of the vehicle's body.

Figure 17 (D) finally illustrates a small-sized module formed of the transparent member 28 made as a rigid multi-layer (transparent/opaque) bimaterial composite in such a structure as to integrally form the walls of the containment box; in this way, it is sufficient for a simple planar member supporting the circuit, and allowing the connection wires to exit, to be joined thereto, e.g. by welding or some other known technique. Even this embodiment allows for application to both sealed and non-sealed parts of the vehicle's body.

## Claims

1. Lighting arrangement for the illumination of the number plate of motor-vehicles, comprising a light source (26) protected by a transparent shielding member (28) and a lens (42) adapted to emit a light beam (32) with an optical axis that is just slightly inclined relative to the plane of the number plate (34), said shielding member (28) being provided with a partial screening provision aimed at attenuating the luminance in the central area of the number plate lying closer to the light source (26), **characterised in that** said lens (42) is integrated in said transparent shielding member (28) and features a convex section, wherein such convexity faces the light source (26), with a circular contour in a substantially cylindrical shape.

2. Lighting arrangement according to claim 1, **characterized in that** the convexity of the lens (42) has a contour with a variable radius of curvature when viewed in the cross-section thereof.

3. Lighting arrangement according to claim 2, **characterized in that** the inner surface of the lens (42) and the transparent shielding member (28) is partially provided with an optical masking provision acting as a screen (38).

4. Lighting arrangement according to claim 3, **characterized in that** said partial light screen (38) is formed of a surface coating.

5. Lighting arrangement according to claim 3, **characterized in that** said partial light screen (38) is obtained by a surface opacification process

6. Lighting arrangement according to claim 3, **characterized in that** said partial light screen (38) is obtained by a co-moulding process, in which it is integrally moulded with the lens (42).

7. Lighting arrangement according to any of the claims 4 to 6, **characterized in that** the optical group formed by the shielding member (28), the partial light screen (38) and the lens (42) supports the light source (26) by means of snap-fitting fastening means (50) so as to form a single compact unit.

8. Lighting arrangement according to claim 7, **characterized in that** the light source (26) is fitted in a container (52) closed by the optical group (28, 38, 42).

9. Lighting arrangement according to claim 7 or 8, **characterized in that** the shielding member (28) is made of transparent/opaque bimaterial and is adapted to seal off the optical group.

## Patentansprüche

1. Beleuchtungsanordnung für die Beleuchtung des Nummernschildes von Kraftfahrzeugen die eine Lichtquelle (26), die durch ein transparentes Abschirmelement (28) geschützt wird, sowie eine Linse (42) umfasst, die so eingerichtet ist, dass sie einen Lichtstrahl (32) mit einer optischen Achse emittiert, die geringfügig relativ zu der Ebene des Nummernschildes (34) geneigt ist, wobei das Abschirmelement (28) mit einer Teil-Abdeckeinrichtung versehen ist, die dazu dient, die Helligkeit in dem Mittelbereich des Nummernschildes abzuschwächen, der näher an der Lichtquelle (26) liegt, **dadurch gekennzeichnet, dass** die Linse (42) in das transparente Abschirmelement (28) integriert ist und einen konvexen Abschnitt mit einer kreisförmigen Kontur in einer im Wesentlichen zylindrischen Form aufweist und diese Konvexität der Lichtquelle (26) zugewandt ist

2. Beleuchtungsanordnung nach Anspruch 1, **dadurch gekennzeichnet, dass** die Konvexität der Linse (42), im Querschnitt gesehen, eine Kontur mit einem variablen Krümmungsradius aufweist.

3. Beleuchtungsanordnung nach Anspruch 2, **dadurch gekennzeichnet, dass** die Innenfläche der Linse (42) und des transparenten Abschirmelementes (28) teilweise mit einer optischen Verdeckungseinrichtung versehen ist, die als eine Abschirmung (38) dient.

4. Beleuchtungsanordnung nach Anspruch 3, **dadurch gekennzeichnet, dass** die Teil-Lichtabdeckung (38) aus einer Oberflächenbeschichtung besteht

5. Beleuchtungsanordnung nach Anspruch 3, **dadurch gekennzeichnet, dass** die Teil-Lichtabdeckung (38) durch einen Oberflächeneintrübungsprozess hergestellt wird.

6. Beleuchtungsanordnung nach Anspruch 3, **dadurch gekennzeichnet, dass** die Teil-Lichtabdeckung (38) mit einem Co-Moulding-Prozess hergestellt wird, in dem sie integral mit der Linse (42) geformt wird.

7. Beleuchtungsanordnung nach einem der Ansprüche 4 bis 6, **dadurch gekennzeichnet, dass** die optische Gruppe, die durch das Abschirmelement (28), die Teil-Lichtabdeckung (38) und die Linse (42) gebildet wird, die Lichtquelle (26) mittels einer Einrast-Befestigungseinrichtung (50) trägt, so dass eine geschlossene kompakte Einheit entsteht

8. Beleuchtungsanordnung nach Anspruch 7, **dadurch gekennzeichnet, dass** die Lichtquelle (26) in einen Behälter (52) eingesetzt ist, der durch die optische Gruppe (28, 38, 42) verschlossen wird.

9. Beleuchtungsanordnung nach Anspruch 7 oder 8, **dadurch gekennzeichnet, dass** das Abschirmelement (28) aus transparentem/opakem Bi-Material besteht und so eingerichtet ist, dass es die optische Gruppe abdichtet.

## Revendications

1. Agencement lumineux pour éclairer la plaque minéralogique de véhicules à moteur, comprenant une source de lumière (26) protégée par un élément de protection (28) transparent et une lentille (42) adaptée pour émettre un faisceau lumineux (32) avec un axe optique qui est juste légèrement incliné par rapport au plan de la plaque minéralogique (34), ledit élément de protection (28) étant équipé d'un écran partiel destiné à atténuer la luminance dans l'aire centrale de la plaque minéralogique s'étendant près de la source de lumière (26), **caractérisé en ce que** ladite lentille (42) est intégrée dans ledit élément de protection (28) transparent et présente une section convexe, ladite convexité faisant face à la source de lumière (26), avec un contour circulaire dans une forme substantiellement cylindrique

2. Agencement lumineux selon la revendication 1, **caractérisé en ce que** la convexité de la lentille (42) a un contour avec un rayon de courbure variable lorsqu'on la regarde en section transversale.

3. Agencement lumineux selon la revendication 2, **caractérisé en ce que** la surface intérieure de la lentille (42) et de l'élément de protection (28) transparent est partiellement équipée d'un masque optique agissant comme un écran (38).

4. Agencement lumineux selon la revendication 3, **caractérisé en ce que** ledit écran (38) coupe-flux partiel est formé d'un revêtement de surface.

5. Agencement lumineux selon la revendication 3, **caractérisé en ce que** ledit écran (38) coupe-flux partiel est obtenu par un procédé d'opacification de surface.

6. Agencement lumineux selon la revendication 3, **caractérisé en ce que** ledit écran (38) coupe-flux partiel est obtenu par un procédé de co-moulage, dans lequel il est moulé intégralement avec la lentille (42).

7. Agencement lumineux selon l'une quelconque des revendications 4 à 6, **caractérisé en ce que** le groupe optique formé par l'élément de protection (28), l'écran (38) coupe-flux partiel et la lentille (42) supporte la source de lumière (26) au moyen de moyens de fixation encliquetable (50) de sorte à former une unité compacte unique.

8. Agencement lumineux selon la revendication 7, **caractérisé en ce que** la source de lumière (26) est adaptée dans un réceptacle (52) fermé par le groupe optique (28, 38, 42).

9. Agencement lumineux selon la revendication 7 ou 8, **caractérisé en ce que** l'élément de protection (28) est fait de bi-matériau transparent/opaque et est adapté pour sceller le groupe optique.
